# EUROPEAN PATENT SPECIFICATION

(11) **EP 1 427 162 B1**
(45) Date of publication and mention of the grant of the patent: **07.11.2007**
(21) Application number: 03026950.0
(22) Date of filing: 25.11.2003
(51) Int. Cl.: H04L 29/06, H04L 29/14

(54) **Security processor mirroring**
Sicherheitsprozessorspiegelung
Miroitage de processeur de sécurité

(30) Priority: 05.12.2002 US 431062 P; 14.07.2003 US 619352
(43) Date of publication of application: 09.06.2004
(73) Proprietor: Broadcom Corporation, Irvine, CA 92617 (US)
(72) Inventor: Buer, Mark, Gilbert, AZ 85296 (US)
(74) Representative: Jehle, Volker Armin

(56) References cited:
- EP-A- 1 079 581
- US-A- 5 022 076
- ISHII S ET AL: "A HIGH-SPEED PUBLIC KEY ENCRYPTION PROCESSOR" SYSTEMS & COMPUTERS IN JAPAN, SCRIPTA TECHNICA JOURNALS. NEW YORK, US, vol. 29, no. 1, 1998, pages 20-31, XP000742968 ISSN: 0882-1666

## Description

### FIELD OF THE INVENTION

The invention relates to a method of mirroring security processors and a security processing system.

### BACKGROUND

The transmission of data over a data network typically involves sending messages between application programs ("applications") executing on host processors connected to the data network. In a packet network such as the Internet a host processor encapsulates data from an application into data packets to send the data over the packet network. When a host processor receives the data packet from the packet network, the host processor unencapsulates the packets to obtain the data. The host processor then provides the data to the appropriate application.

Data transmitted over public networks such as the Internet may be encrypted to prevent unauthorized parties from intercepting the data. Typically, a device connected to the network encrypts data using a cipher algorithm and an encryption key. The device sends the encrypted data over the network to another device that decrypts the data using the cipher algorithm and a decryption key.

Several standards have been developed to facilitate secure data transmission over data networks. For example, the Internet security protocol ("IPsec") may be used to establish secure host-to-host pipes and virtual private networks over the Internet. IPsec defines a set of specifications for cryptographic encryption and authentication. IPsec also supports several algorithms for key exchange, including an Internet Key Exchange ("IKE") algorithm for establishing keys for secure sessions established between applications.

Protocols such as IPsec may use security association information in the encryption/decryption process. Security association information typically includes encryption and/or decryption keys and other information regarding the encryption and/or decryption process. In addition, security association information may include sequence numbers and byte counts that are incremented with each packet transmission. The components in the system may use the sequence numbers and byte counts to determine whether packets are being lost in the network.

Some systems include dedicated devices that offload some of the processing operations from the host processor. For example, a network processor may be used to perform some of the packet processing operations. A cryptographic accelerator may be used to perform the cipher algorithms to offload encryption/decryption processing from the host processor.

In a typical system, the primary data flow is from the host processor to the network processor then to the network, and vice-versa. In addition, the host processor or network processor routes packets that will be encrypted or decrypted to the cryptographic accelerator. The cryptographic accelerator then routes the encrypted or decrypted packets back to the host processor or network processor. In personal computer-based systems, the host processor, network processor and cryptographic accelerator typically are connected via a peripheral component interface ("PCI") bus.

There is a perpetual need for increased reliability, operating speed and implementation flexibility in data communications systems. On the one hand, developers are continually creating applications that require increasingly greater amounts of data to be sent between system components. On the other hand, end users want their applications to run faster which, in turn, often requires that associated data transfers be performed more quickly.

In an attempt to address the need for faster data communications, various groups have developed standards that specify high-speed data transfers between components of data communication systems. For example IEEE standards 802.3ab and 802.3z define Ethernet systems for transferring data at rates up to one gigabit per second (1 Gbit/s). IEEE standard 802.3ae defines an Ethernet system for transferring data at rates up to 10 Gbits/s.

Many applications such as those involving financial transactions require reliable network connections. Network downtime for such applications may result in significant monetary loss.

The need for fast and reliable data transfers has fostered a demand for network equipment and operating methods that provide high data transfer rates with minimal network downtime. Moreover, there is an ever-present economic motivation to achieve such results in a cost effective and adaptable manner. Accordingly, a need exists for improved data security processing techniques to support data transmission over data networks.

US 5,022,076 describes a fault tolerant processor arrangement, wherein redundant processors are coupled in parallel in a master/slave configuration. The master processor generates a periodic pulse, which is detected by the slave processor. As long as the periodic pulse is detected by the slave processor the output of the master processor remains enabled and the output of the slave processor is disabled. If the periodic pulse is not detected by the slave processor, the slave processor disables the output of the master processor, wherein the output of the slave processor becomes enabled.

According to the present invention a method of mirroring security processors as defined by independent claim 1 and a mirrored security processing system as defined by independent claim 2 are provided. Further advantageous features of the present invention are defined in the dependent subclaims.

The invention relates to methods and associated systems for providing secured data transmission over a data network. For example, a device constructed according to the invention may provide a mirrored security processing system. Two or more security processors may be configured so that one of the security processors may handle the packet traffic of another security processor in the event of a failure associated with the other security processor.

In one design, security association information is copied from a first security processor to a second security processor. In this way, if the first security processor fails, the packet traffic may be rerouted to the second security processor. Since the second security processor already has the security association information associated with the packet traffic, the packet traffic may be rerouted without significant interruption.

The security association information may be sent to the second security processor at regular intervals. For example, the security association information may be sent after the sequence number is incremented a specific number of times.

In addition, the security association information may be sent to the second security processor on a per-packet basis or per-multiple packet basis. For example, the security association information may be sent from a first security processor to a second security processor after each packet is transmitted from or received by the first security processor. Alternatively, the security association information may be sent from a first security processor to a second security processor each time a given number of packets are transmitted from or received by the first security processor.

When packet traffic needs to be rerouted from one security processor to another, provisions may be made to ensure that a given packet is not received twice. In one embodiment this is accomplished by increasing the sequence number before sending it to the second security processor.

In one design, the security association information is sent between the security processors using a dedicated link. This link may be a packet-based link.

In one design, the security association information is sent between the security processors in packets over an Ethernet network.

### BRIEF DESCRIPTION OF THE DRAWINGS

These and other features, aspects and advantages of the present invention will be more fully understood when considered with respect to the following detailed description, appended claims and accompanying drawings, wherein:
Figure 1 is a block diagram of one embodiment of a security processing system constructed in accordance with the invention;
Figure 2 is a flowchart illustrating operations that may be performed in accordance with the embodiment of Figure 1;
Figure 3 is a block diagram of one embodiment of a security processing system constructed in accordance with the invention;
Figure 4 is a flowchart illustrating operations that may be performed in accordance with the embodiment of Figure 3; and
Figure 5 is a graphical representation of one embodiment of a memory access packet according to the invention.

### DETAILED DESCRIPTION OF ILLUSTRATIVE EMBODIMENTS OF THE INVENTION

The invention is described below, with reference to detailed illustrative embodiments. It will be apparent that the invention can be embodied in a wide variety of forms, some of which may be quite different from those of the disclosed embodiments. Consequently, the specific structural and functional details disclosed herein are merely representative and do not limit the scope of the invention.

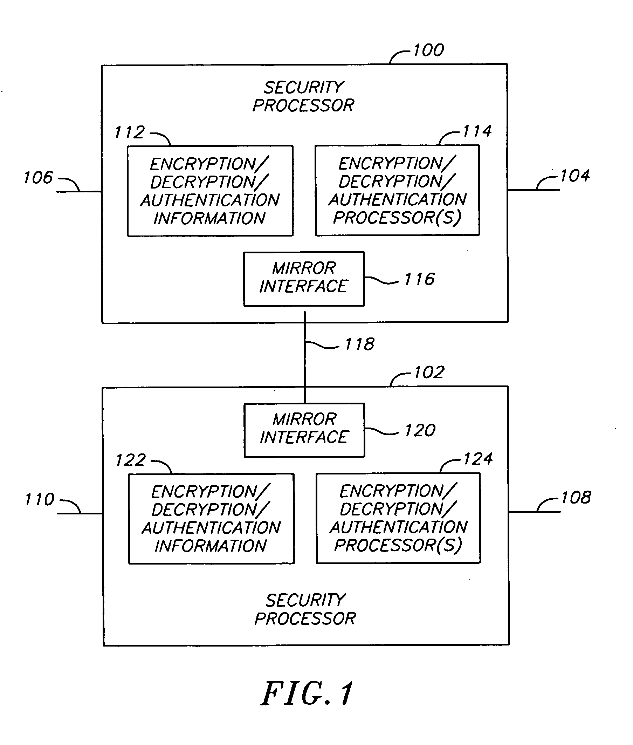

Figure 1 is a block diagram of one embodiment of a security processing system S constructed according to the invention. A pair of security processors 100 and 102 are connected to packet networks as represented by the lines 106 and 104 and 110 and 108, respectively. Each security processor 100 and 102 includes one or more encryption/decryption/authentication processor(s) for encrypting, decrypting and/or authenticating packet data received from and transmitted to the packet networks. In accordance with one embodiment of the invention, the security processors 100 and 102 share information so that one of the security processors may process the packet data for the other security processor when the other security processor is unable to process its packet data.

Each security processor 100 and 102 includes a data memory for storing encryption, decryption and/or authentication information 112 and 122, respectively. Typically, the security processors 100 and 102 will modify the information 112 and 122 as packets are processed. For example, the information 112 and 122 may include sequence numbers that are incremented as each new packet is received from or transmitted to the network.

In accordance with one embodiment of the invention, the security processors 100 and 102 include mirror interfaces 116 and 120, respectively, for transmitting information between each other. For example, the security processor 100 may periodically transfer a portion or all of the information 112 to the security processor 102. The security processor 102 may then store the received information 112 with its information 122.

In one embodiment of the invention, the mirror interfaces communicate via a dedicated link as represented by line 118. For example, each mirror interface may include a media access controller ("MAC") and the link 118 may take the form of a packet network. It should be appreciated, however, that the link 118 may be implemented in other ways.

In another embodiment, the mirror interfaces may interface with the networks (e.g., 106 and 110) to transfer information between the security processors 100 and 102. In this case, the mirror interfaces may generate packets that include headers with the destination address set to the target security processor.

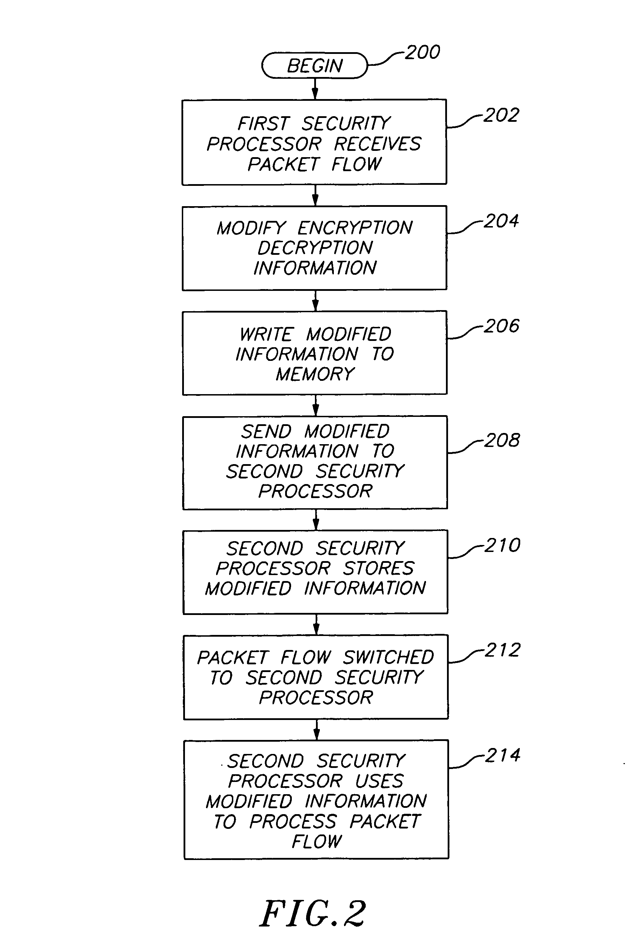

Several operations of the system S will be treated in more detail in conjunction with the flowchart of Figure 2 beginning at block 200. In the example that follows, the security processor 100 is connected to a host processor (not shown) by network 102. The host processor sends packets to and receives packets from other host processors (not shown) that are connected to network 104. The security processor 100 encrypts packets sent by the host processor before the packets are sent to the network 104. In a complementary operation, the security processor 100 decrypts packets sent to the host processor as the packets are received from the network 104.

As represented by block 202, the security processor 100 receives packets from the host processor via network 106. The encryption processor 114 then encrypts the packets in preparation for routing the packets over the network 104.

As represented by block 204, the security processor 100 may modify the information 112 in conjunction with the encryption operation. For example, a sequence number associated with the packet flow may be incremented. In addition, a byte count associated with the flow may be modified as well.

As represented by block 206, the security processor 100 stores the information 112 in a data memory so that the information may be used for subsequent packet operations. In the example referred to in block 204, a sequence number and byte count may be stored at this step.

Next, the information that was modified may be sent to the security processor 102 (block 208). In one embodiment, the security processor 100 may send this information every time a packet is processed. Typically, however, the security processor 100 sends this information after a specific number of packets have been processed. For example, the security processor 100 may send the information 112 after 128 packets have been processed, after 256 packets have been processed, and so forth.

As represented by block 210, the security processor 102 stores the information 112 in a data memory (e.g., block 122). Typically, as new information arrives, the security processor 102 overwrites the previously received information.

From time to time, the security processor 100 may be unable to process packets. This may be caused, for example, by a failure of the security processor 100 or the links connected to the security processor 100. Alternatively, this may be caused by an administrator taking the security processor 100 out of service.

In the event security processor 100 is unable to process packets, the host processor may route the packet flow that was going through security processor 100 to now flow through security processor 102 (block 212). Thus, security processor 102 will encrypt packets sent by the host processor before the packets are sent to the network 108 and the security processor 100 will decrypt packets sent to the host processor as the packets are received from the network 108.

Moreover, due to the exchange of information 112 as discussed above, the security processor 102 has access to the latest information (or information that is relatively close to the latest information) for processing the packet flow that was previously processed by security processor 100. For example, the security processor 102 will have stored relatively recent values of the sequence number and byte count. Thus, the connection between the host processor and its peer processors will likely not be lost. Under certain circumstances, some packets may be lost, however, given that a failure was probably the cause of the loss of security processor 100. This relatively insignificant loss of packets may be generally acceptable.

Thus, as represented by block 214, the security processor 102 uses the information that was sent to it by security processor 100 to process the new packet flow. Accordingly, this embodiment of the invention provides reliable security processing.

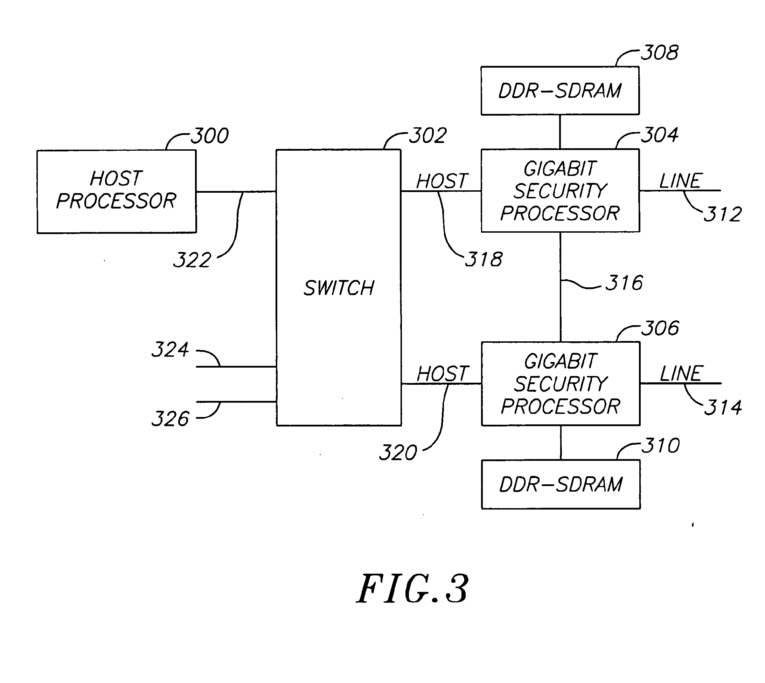

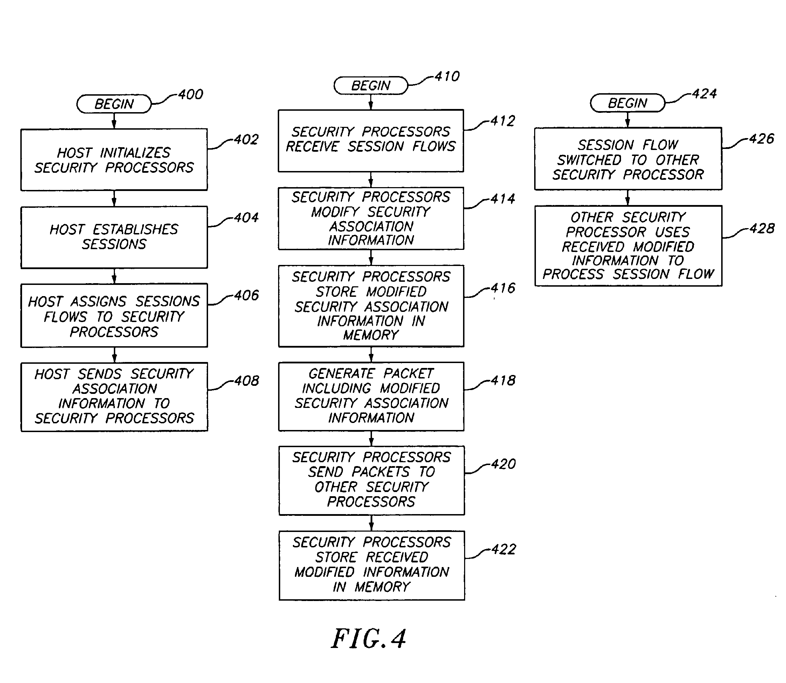

Figure 3 depicts an embodiment of a Gigabit security processing system constructed according to the invention. In this embodiment each security processor has the capability to mirror security association updates to another security processor. This feature may be used to provide redundant processing within a system as shown in Figure 3. Several operations of the system of Figure 3 will be described in conjunction with the flowchart of Figure 4 beginning at block 400.

In the embodiment of Figure 3 the security processors 304 and 306 are managed through GMAC "host-side" interfaces (not shown) that connect to the host processor 300 via lines 318 and 320, respectively. Other GMAC interfaces also may be used for management. The host processor 300 manages both security processors 304 and 314 in the system in a similar manner.

As represent by block 402, the host processor 300 initializes the security processors 304 and 306 via configuration packets. All configuration packets are sent to both security processors 304 and 306.

As represent by block 404, an application executing on the host processor 300 establishes session flows with other applications executing on processors connected to the network. This may include defining security association information for secure sessions.

A switch 302 splits the packet traffic associated with the session flows between the security processors 304 and 306 during normal operation (block 406). In one embodiment this provides a 2 Gigabits per second ("Gbps") uplink capability to the network represented by lines 312 and 314 on the "line-side*"* of the security processors.

In this embodiment flow splitting is static. Thus, packets on a particular security association go the same security processor, for a single flow maximum rate of 1 Gbps.

As represented by block 408, as the host processor 300 establishes sessions with peer processors, the host processor 300 sends the corresponding security association information to the security processors 304 and 306.

Referring now to the middle column in Figure 4 beginning at block 410, several operations of the security processors 304 and 306 will be discussed. As represented by block 412, each of the security processors processes packet traffic associated with the session flows allocated to that security processor. The security processors update their security association information as the packets are processed (block 414).

As represented by block 416, each security processor will send security association update data to local memory (e.g., dual data rate - serial dynamic RAM data memories 308 and 310).

In addition, each security processor will send security association update data to the other security processor via the cross connected GMAC interfaces automatically (e.g., via line 316). This process includes generating a packet that contains the update data (block 418) and sending the packet to the other security processor (block 420). In addition, as represented by block 422, the security processor that receives the update data may store the data in a data memory (e.g., DDR-SRAMs 308 or 310).

Referring now to the last column beginning at block 424, if one of the uplink ports (e.g. security processors) goes down, the system simply switches all traffic through the opposite security processor (block 426). Since the security association changeable fields are already in-sync, the traffic may progress without interruption (block 428).

In the event the host is able to reset the failed link, the security association data from the operating security processor may be copied into the reinitialized security processor. Once the security processors are back in-sync, traffic may once again be split between the two devices without loss of packets.

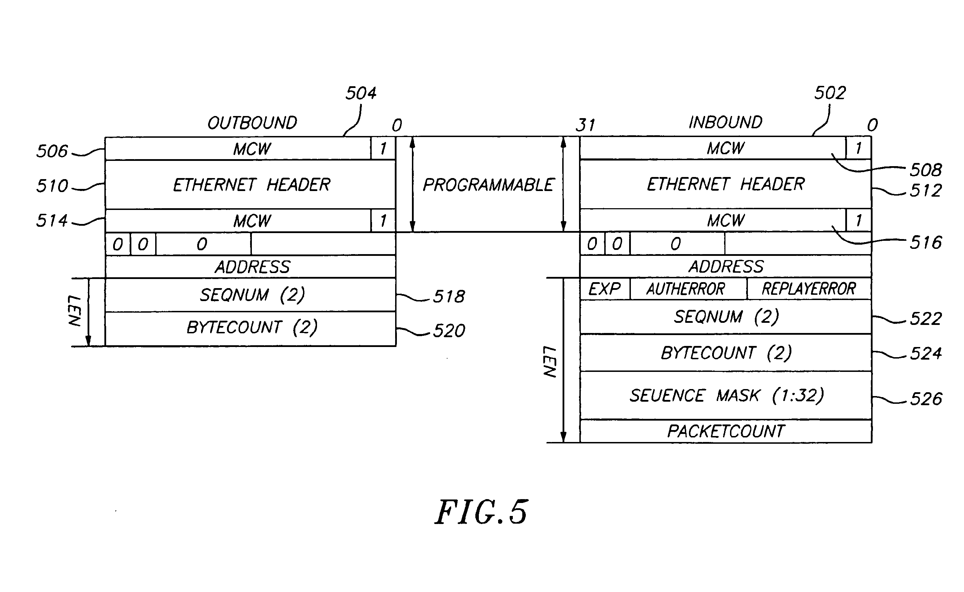

The security processor may perform the security association synchronization by automatically generating Memory Access Packets ("MAPs") that contain the security association update information (the same information and address that is written to local memory). The MAP "write" packet may be forwarded with a programmable header as shown in Figure 5.

The same programmable header may be used for both inbound update packets 502 and outbound update packets 504. In one embodiment, the maximum header size is 32 bytes, and the header is at least 4 bytes. A master control word ("MCW") is used to route the packet through the security processors. An outer MCW 506 or 508 is automatically generated by the security processor for proper routing through the security processor that generates the packet. An Ethernet header 510 or 512 may be used to route the packet over a network connection from the originating security processor to the target security processor. Another MCW 514 or 516 may be used by the target security processor to route the packet through that device.

The output target in the MCW, is programmed separately and replaced by the generator of the mirror packet. The security processor supports two separate output targets for each generator of mirror packets. The generator round-robin inserts the output target bits on generation of packets. This method allows the mirror packets to be split across up to two output interfaces (e.g. GMAC) regardless of inbound/outbound traffic mix.

Additional details of one embodiment of mirror updates for an outbound packet will now be discussed. The security processor constructs the mirror update packet from the data that it posts to local memory. This data may include, for example, a sequence number 518 and a byte count 520. To ensure coherency during the switch over from one device to another, the sequence number is adjusted by the security processor in the mirror packet. The frequency of updates may be determined based on the sequence number. The frequency of outbound update may be globally set in the security processor. The enabling of mirroring packets may be set on a per security association basis. The frequency and value of mirror packet generation may be determined by the following logic:
#define SEQ_OUT_INC <16 bit value set by host>
#define MIRROR_OUT_PKTS <16 bit value set by host>
IF (sequence_number MOD MIRROR_OUT_PKTS = 0) THEN
generate mirror_packet;
mirror_packet.sequence = sequence_number + SEQ_OUT_INC;
mirror_packet.byte_cnt = byte_cnt;
ENDIF

The update may be set for every packet by setting MIRROR_OUT_PKTS to zero.

Additional details of one embodiment of mirror updates for an inbound packet will now be discussed. The inbound security association update mirror packet is generated similar to the outbound case. As represented in Figure 5, the packet may include, for example, a sequence number 522, a byte count 524 and a sequence mask 526 (e.g., a sequence number replay window). However, the calculation of the frequency and update value may be slightly different. The frequency of the inbound update may be globally set in the security processor. The enabling of mirroring packets may be set on a per SA basis.

The security processor tracks the upper value of the sequence number 522 for the replay window 526 on inbound packets. The replay window 526 represents the trailing "n" (64-1024) packets. The frequency and value of mirror packet generation may be determined by the following logic:
#define SEQ_IN_INC <16 bit value set by host>
#define MIRROR_IN_PKTS <16 bit value set by host>
#define SEND_REPLAY <enable/disable by host>
//----------------------------------------------------------------------------------------
// Sequence number update spans mirror packet
//-----------------------------------------------------------------------------------------

IF (previous_sequence_number + MIRROR_IN_PKTS < sequence_number) THEN
generate mirror_packet;
mirror_packet.sequence = sequence_number + SEQ_IN_INC;
mirror_packet.byte_cnt = byte_cnt;
//------------------------------------------------------------------------------------------
// Sequence number has sent required number of packets
//-------------------------------------------------------------------------------------------
ELSE IF (sequence_number MOD MIRROR_IN_PKTS = 0) THEN
generate mirror_packet;
mirror_packet.sequence = sequence_number + SEQ_IN_INC;
mirror_packet.byte_cnt = byte_cnt;
ENDIF
//------------------------------------------------------------------------------------------
// Optionally Send ReplayWindow
//------------------------------------------------------------------------------------------
IF (SEND_REPLAY = true) THEN
mirror_packet.replay = replay_window;
mirror_packet.pkt_cnt = packet_count;
ENDIF

The update may be set for every packet by setting MIRROR_IN_PKTS to zero. The replay window may be disabled in the generation of the mirror packets to save bandwidth. In this case, the host processor should ensure that the SEQ_IN_INC > Inbound Replay Size + MIRROR_IN_PKTS) to prevent a packet from being replayed when being transferred from one security processor to another.

In one embodiment, the security processor of Figure 3 is implemented in a single integrated circuit. Each MAC interfaces to a SERDES (not shown) for the packet network interfaces. In this case, lines 312, 314, 316, 318 and 320 represent SERDES compatible signals.

It should be appreciated that the inventions described herein are applicable to and may utilize many different protocols and standards and modifications and extensions of those protocols and standards including, for example and without limitation, IP, TCP, UDP, ICMP, IPsec, SSL and FCsec. Moreover, a variety of cryptographic and signature algorithms and modifications and extensions thereof may be used. The invention may be practiced using tunnel mode and/or transport mode packet processing.

The invention may be implemented on a variety of networks including, without limitation, Ethernet, ATM, FDDI and fiber channel. An appropriate media access controller (MAC) would be used for these different networks. It should also be appreciated that the inventions described herein may be constructed using a variety of physical components and configurations. For example, a variety of hardware and software processing components may be used to implement the functions of the host processors, security processors and the other components and processes described herein. These hardware and software components include, without limitation, processors and associated data memory, state machines and logic and may involve execution of software, firmware or other code. Such components may be combined on one or more integrated circuits. For example, several of these components may be combined within a single integrated circuit. Some components may be implemented as a single integrated circuit. Some components may be implemented using several integrated circuits.

In addition, the components and functions described herein may be connected in many different ways. Some of the connections represented by the lead lines in the drawings may be in an integrated circuit, on a circuit board, over a backplane to other circuit boards, over a local network and/or over a wide area network (e.g., the Internet). Thus, some of the components may be located in a remote location with respect to the other components. Typically, one or more of the connections represented by the lead lines in the drawings may, for example, comprise a data network. In addition, these connections may be made with physical wire, fiber and/or wireless connections, for example.

A wide variety of devices may be used to implement the data memories (e.g., local memory, databases and non-volatile memories) discussed herein. For example, a data memory may comprise one or more RAM, disk drive, SDRAM, FLASH or other types of data storage devices.

The invention may be practiced using different types of cipher engines. For example, in one embodiment of the invention data is encrypted or decrypted using a block cipheror a stream cipher.

In summary, the invention described herein teaches improved security processing techniques. While certain exemplary embodiments have been described in detail and shown in the accompanying drawings, it is to be understood that such embodiments are merely illustrative of and not restrictive of the broad invention. In particular, is should be recognized that the teachings of the invention apply to a wide variety of systems and processes that are configurable. It will thus be recognized that various modifications may be made to the illustrated and other embodiments of the invention described above, without departing from the broad inventive scope thereof. In view of the above it will be understood that the invention is not limited to the particular embodiments or arrangements disclosed, but is rather intended to cover any changes, adaptations or modifications which are within the scope of the invention as defined by the appended claims.

## Claims

1. A method of mirroring security processors comprising the step of:
generating security association information in a first security processor (100);
sending the security association information from the first security processor (100) to a second security processor (102) after a specific number of packets have been processed by the first security processor (100); and
terminating or initiating packets by at least one host processor (300) connected to the first security processor (100) and to the second security processor (102).

2. A mirrored security processing system, comprising a first security processor (100), a second security processor (102), and at least one host processor (300), wherein:
the first security processor (100) is adapted to process packets and to update security association information associated with the packets, the first security processor (100) comprising at least one media access controller adapted to send updated security association information to the second security processor (102) over a packet network after a specific number of packets have been processed by the first security processor (100);
the second security processor (102) is adapted to receive the updated security association information over the packet network; and
the at least one host processor (300) is connected to the first security processor (100) and to the second security processor (102) and is adapted to terminate or initiate the packets.

## Patentansprüche

1. Verfahren zur Spiegelung von Sicherheitsprozessoren, das die folgenden Schritte umfasst:
Erzeugen von Sicherheitsassoziationsinformationen in einem ersten Sicherheitsprozessor (100);
Senden der Sicherheitsassoziationsinformationen von dem ersten Sicherheitsprozessor (100) zu einem zweiten Sicherheitsprozessor (102), nachdem eine spezifische Anzahl von Paketen von dem ersten Sicherheitsprozessor (100) verarbeitet worden ist; und
Beenden oder Initiieren von Paketen durch wenigstens einen Host-Prozessor (300), der mit dem ersten Sicherheitsprozessor (100) und dem zweiten Sicherheitsprozessor (102) verbunden ist.

2. Gespiegeltes Sicherheitsverarbeitungssystem, das einen ersten Sicherheitsprozessor (100), einen zweiten Sicherheitsprozessor (102) und wenigstens einen Host-Prozessor (300) umfasst, wobei:
der erste Sicherheitsprozessor (100) so ausgelegt ist, dass er Pakete verarbeiten und Sicherheitsassoziationsinformationen aktualisieren kann, die mit den Paketen assoziiert sind, wobei der erste Sicherheitsprozessor (100) wenigstens einen Media Access Controller umfasst, der so ausgelegt ist, dass er aktualisierte Sicherheitsassoziationsinformationen zu dem zweiten Sicherheitsprozessor (102) über ein Paketnetz senden kann, nachdem eine spezifische Anzahl von Paketen von dem ersten Sicherheitsprozessor (100) verarbeitet worden ist;
der zweite Sicherheitsprozessor (102) so ausgelegt ist, dass er die aktualisierten Sicherheitsassoziationsinformationen über das Paketnetz empfangen kann; und
der wenigstens eine Host-Prozessor (300) mit dem ersten Sicherheitsprozessor (100) und dem zweiten Sicherheitsprozessor (102) verbunden ist und so ausgelegt ist, dass er die Pakete beenden oder initiieren kann.

## Revendications

1. Procédé de doublement de processeurs de sécurité comprenant l'étape consistant à :
générer des informations d'association de sécurité dans un premier processeur de sécurité (100) ;
envoyer les informations d'association de sécurité du premier processeur de sécurité (100) à un deuxième processeur de sécurité (102) après qu'un nombre spécifique de paquets a été traité par le premier processeur de sécurité (100) ; et
terminer ou initier des paquets par au moins un processeur hôte (300) connecté au premier processeur de sécurité (100) et au deuxième processeur de sécurité (102).

2. Système de traitement de sécurité doublé, comprenant un premier processeur de sécurité (100), un deuxième processeur de sécurité (102), et au moins un processeur hôte (300), dans lequel:
le premier processeur de sécurité (100) est adapté pour traiter des paquets et pour actualiser des informations d'association de sécurité associées aux paquets, le premier processeur de sécurité (100) comprenant au moins un contrôleur d'accès au support adapté pour envoyer des informations d'association de sécurité actualisées au deuxième processeur de sécurité (102) sur un réseau de paquets après qu'un nombre spécifique de paquets a été traité par le premier processeur de sécurité (100) ;
le deuxième processeur de sécurité (102) est adapté pour recevoir les informations d'association de sécurité actualisées sur le réseau de paquets ; et
l'au moins un processeur hôte (300) est connecté au premier processeur de sécurité (100) et au deuxième processeur de sécurité (102) et est adapté pour terminer ou initier les paquets.
